# EUROPEAN PATENT APPLICATION

(11) **EP 4 765 249 A1**
(43) Date of publication of application: **24.06.2026**
(21) Application number: 25841430.9
(22) Date of filing: 15.07.2025
(51) Int. Cl.: H01M 4/525, H01M 4/505, H01M 4/131, H01M 10/052, H01M 4/02

(54) **CATHODE ACTIVE MATERIAL, AND CATHODE AND LITHIUM SECONDARY BATTERY COMPRISING SAME**

(30) Priority: 19.07.2024 KR 20240095995
(71) Applicant: LG Energy Solution, Ltd., Seoul 07335 (KR); POSTECH Research and Business Development Foundation, Pohang-si, Gyeongsangbuk-do 37673 (KR)
(72) Inventor: BAEK, So Ra, Daejeon 34122 (KR); JO, Chi Ho, Daejeon 34122 (KR); YOON, Yeong Deok, Daejeon 34122 (KR); CHO, Hyeon Jin, Daejeon 34122 (KR); YOO, Dong Wan, Daejeon 34122 (KR); CHOI, Si Young, Pohang-si Gyeongsangbuk-do 37673 (KR); KIM, Gi Yeop, Pohang-si Gyeongsangbuk-do 37673 (KR); KIM, Jeong Min, Pohang-si Gyeongsangbuk-do 37673 (KR)
(74) Representative: Hoffmann Eitle
(86) International application number: PCT/KR2025/010386
(87) International publication number: WO 2026/019229

(57) **Abstract**

A positive electrode active material includes a lithium transition metal oxide including Ni in an amount of 60 at% or more among the transition metals excluding lithium, and is in a form of a single particle made up of one nodule or in a form of a pseudo-single particle that is a complex of 30 or fewer nodules. A proportion of a (003) plane with respect to a total surface area of the positive electrode active material is 40 % or less.

## Description

### TECHNICAL FIELD

This application is based on and claims priority from Korean Patent Application No. 10-2024-0095995 filed on July 19, 2024, with the Korean Intellectual Property Office, the disclosure of which is incorporated herein in its entirety by reference.

The present disclosure relates to a positive electrode active material for a lithium secondary battery, a positive electrode and a lithium secondary battery including the same.

### BACKGROUND

In recent years, with the rapid proliferation of electronic devices using batteries such as mobile phones, laptops, computers, and electric vehicles, the demand for small, lightweight, and relatively high-capacity secondary batteries has rapidly increased. In particular, lithium secondary batteries are gaining attention as a power source for mobile devices due to their light weight and high energy density. Thus, many researches and developments are progressing to improve the performance of lithium secondary batteries.

In a lithium secondary battery, electric energy is generated through oxidation and reduction reactions that occur when lithium ions are intercalated into and deintercalated from the positive and negative electrodes, in a state where an organic electrolyte or a polymer electrolyte is filled between the positive electrode and the negative electrode, which are made up of active materials capable of intercalating and deintercalating lithium ions.

Examples of the positive electrode active material for a lithium secondary battery include lithium cobalt oxide (LiCoO₂), lithium nickel oxides(LiNiO₂), lithium manganese oxide (such as LiMnO₂ or LiMn₂O₄), and lithium iron phosphate compound (LiFePO₄). Among these, lithium cobalt oxide (LiCoO₂) has been widely used due to its high operating voltage and excellent capacity characteristics, and has been applied as a high-voltage positive electrode active material. However, due to rising cobalt (Co) prices and instability in the supply, there are limitations to large-scale use as a power source for applications such as electric vehicles. As a result, there is an increasing need to develop alternative positive electrode active materials.

Accordingly, nickel-cobalt-manganese (NCM)-based lithium composite transition metal oxide have been developed, in which some of cobalt (Co) is substituted with nickel (Ni) and manganese (Mn). In the related art, lithium nickel cobalt manganese oxides have generally been in the form of spherical secondary particles formed by aggregation of several tens to several hundreds of primary particles. However, in the case of lithium nickel cobalt manganese oxides having a secondary particle structure in which a large number of primary particles are aggregated, there is a problem in that particle fracture is likely to occur during the rolling process in positive electrode manufacturing due to detachment of the primary particles, and cracks may form inside the particles during charge and discharge process. When particle fracture or cracking occurs in the positive electrode active material, the contact area with the electrolyte increases, leading to side reactions with the electrolyte, which in turn causes gas generation and degradation of the active material, thereby deteriorating the life characteristics. In addition, since fine particles are generated by fracture during rolling, there is a problem of low rolling density and low energy density.

### DISCLOSURE OF THE INVENTION

### TECHNICAL PROBLEM

The present disclosure has been made to solve the above-described problems, and provides a positive electrode active material that is capable of suppressing particle fracture and crack generation during electrode manufacturing and charge/discharge processes, and that exhibits excellent rolling density.

In addition, the present disclosure provides a positive electrode and a lithium secondary battery having improved output characteristics and long-term cycle performance by including a positive electrode active material with excellent lithium ion mobility.

### TECHNICAL SOLUTION

[1] The present invention provides a positive electrode active material including a lithium transition metal oxide including Ni in an amount of 60 at% or more among the transition metals excluding lithium, in a form of a single particle made up of one nodule or in a form of a pseudo-single particle that is a complex of 30 or fewer nodules, in which a proportion of a (003) plane with respect to a total surface area of the positive electrode active material is 40 % or less.
[2] The present invention provides the positive electrode active material of [1] above, wherein a ratio of a major axis to a minor axis of particles of the positive electrode active material is 1.0 to 1.8.
[3] The present invention provides the positive electrode active material of [1] or [2] above, wherein the lithium transition metal oxide has a composition represented by Formula 1:

   [Formula 1] LiₐNi_{b}Co_{c}M¹_{d}M²ₑO₂

   wherein, M¹ is Mn, Al, or a combination thereof; M² is at least one selected from Zr, W, Y, Ba, Ca, Ti, Mg, Ta, and Nb; and a, b, c, d, and e satisfy 0.8≤a≤1.2, 0.6≤b<1, 0<c<0.4, 0<d<0.4, 0≤e≤0.1.
[4] The present invention provides the positive electrode active material of at least one of [1] to [3] above, wherein a proportion of a (102) plane with respect to the total surface area of the positive electrode active material is 20 % to 80 %.
[5] The present invention provides the positive electrode active material of at least one of [1] to [4] above, wherein a proportion of a (104) plane with respect to the total surface area of the positive electrode active material is 20 % to 80 %.
[6] The present invention provides the positive electrode active material of at least one of [1] to [5] above, wherein a powder resistance of the positive electrode active material is 0.00005 Ω to 0.0005 Ω.
[7] The present invention provides the positive electrode active material of at least one of [1] to [6] above, wherein an average particle diameter D₅₀ of the positive electrode active material is 2 µm to 8 µm.
[8] The present invention provides the positive electrode active material of at least one of [1] to [7] above, wherein a specific surface area BET of the positive electrode active material is 0.3 m²/g to 1.2 m²/g.
[9] The present invention provides the positive electrode active material of at least one of [1] to [8] above, wherein a tap density of the positive electrode active material is 1.5 g/cm³ to 2.9 g/cm³.
[10] The present invention provides a positive electrode including the positive electrode active material of at least one of [1] to [9] above.
[11] The present invention provides a lithium secondary battery including the positive electrode of [10] above.

### ADVANTAGEOUS EFFECTS

The positive electrode active material for a lithium secondary battery according to the present disclosure has a single-particle and/or pseudo-single-particle form with excellent particle strength, thereby suppressing particle fracture and crack generation during electrode manufacturing and charge/discharge processes.

In addition, the positive electrode active material for a lithium secondary battery according to the present disclosure allows dense particle packing, thereby enabling the formation of a positive electrode with high rolling density, which in turn contributes to a high energy density electrode.

Furthermore, the positive electrode active material of the present disclosure exhibits high lithium ion activity at the surface, thereby enabling the provision of a lithium secondary battery with excellent output characteristics.

Since the positive electrode active material of the present disclosure has a uniform lithium ion activity level on the surface, structural degradation in a specific portion may be suppressed, resulting in excellent long-term cycle performance of a lithium secondary battery including the positive electrode active material of the present disclosure.

### BRIEF DESCRIPTION OF THE DRAWINGS

FIG. 1 is a TEM (Transmission Electron Microscope) image of a particle included in the positive electrode active material prepared in Example 1.
FIG. 2 is a TEM (Transmission Electron Microscope) image of a particle included in the positive electrode active material prepared in Example 2.
FIG. 3 is a TEM (Transmission Electron Microscope) image of a particle included in the positive electrode active material prepared in Example 3.
FIG. 4 is a TEM (Transmission Electron Microscope) image of a particle included in the positive electrode active material prepared in Comparative Example 1.
FIG. 5 is a TEM (Transmission Electron Microscope) image of a particle included in the positive electrode active material prepared in Comparative Example 2.

### BEST MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

As used herein, it should be understood that the terms "comprise," "include," or "have" are intended to specify the presence of a feature, number, step, component, or combination thereof, but do not exclude in advance the possibility of the presence or addition of one or more other features, numbers, steps, components, or combinations thereof.

In the present disclosure, the term "secondary particle" refers to a particle formed by aggregation of tens to hundreds of primary particles. For example, the secondary particle is an aggregate of 50 or more primary particles.

The term "particle" used in the present disclosure may include any one or all of a single particle, a pseudo-single particle, a primary particle, a nodule, and a secondary particle.

### Positive Electrode Active Material

In one embodiment of the present disclosure, the positive electrode active material includes Ni in an amount of 60 at% or more among transition metals excluding lithium, and is in the form of a single particle made up of one nodule or a pseudo-single particle that is a complex of 30 or fewer nodules.

In the present disclosure, "at%" means atomic percent, which represents a ratio of the number of atoms of a specific element to the total number of atoms.

In the present disclosure, the "single particle" is a particle made up of one single nodule.

In the present disclosure, the term "nodule" refers to a unit particle that is either a single crystal without a crystalline grain boundary, or a polycrystal in which no apparent grain boundary is observed under a scanning electron microscope (SEM) at a magnification of 5,000 to 20,000 times. In the present disclosure, the term "pseudo-single particle" refers to a composite particle made up of 30 or fewer nodules. The positive electrode active material of the present disclosure exhibits reduced particle fracture and crack generation during rolling in electrode manufacturing. Accordingly, when applied to a secondary battery, the positive electrode active material may implement excellent high-temperature life characteristics due to reduced gas generation and degradation of the active material caused by side reactions with the electrolyte.

In one embodiment of the present disclosure, the positive electrode active material has a proportion of the (003) plane of 40 % or less with respect to the total surface area of the positive electrode active material. In lithium transition metal oxides, various surface crystal planes such as (003), (102), (104), and (012) are present. In the present disclosure, the surface morphology is controlled by adjusting the proportion of the (003) plane among the total surface crystal planes.

In particular, in the case of a positive electrode active material having a single-particle and/or pseudo-single-particle form, it is more difficult to control the surface morphology compared to conventional secondary particles, because the primary particles are larger in size and require a large amount of reaction heat for particle growth.

In the present disclosure, the inventors have found that it is possible to control the surface morphology of the positive electrode active material having a single-particle and/or pseudo-single-particle form by adjusting the proportion of the (003) plane among the surface crystal planes. In conventional secondary particles, the (003) plane, which has low electrochemical lithium ion activity, is distributed at a high proportion among the surface crystal planes, thereby improving the structural stability of the positive electrode active material. In conventional secondary particles, even when the (003) plane is distributed at a high proportion among the surface crystal planes, intercalation and deintercalation of lithium ions are facilitated due to the large specific surface area, so that no deterioration in output characteristics occurs, and rather, an improvement in cycle life characteristics may be achieved.

In contrast, in the positive electrode active material having a single-particle and/or pseudo-single-particle form, when the proportion of the (003) plane exposed on the surface is high, the electrochemical lithium ion activity at the surface becomes low, resulting in poor lithium ion diffusion characteristics. Accordingly, as charge and discharge cycles are repeated, the non-uniformity of lithium ions inside the particles becomes more severe, leading to a tendency for structural degradation to become more pronounced.

In the positive electrode active material of the present disclosure, the proportion of the (003) plane with respect to the total surface area of the positive electrode active material may be 40 % or less, 38 % or less, 35 % or less, 30 % or less, 28 % or less, or 25 % or less. The proportion of the (003) plane with respect to the total surface area of the positive electrode active material may also be greater than 0 %, or 5 % or more, 10 % or more, 15 % or more, or 20 % or more.

In the positive electrode active material of the present disclosure, the proportion of the (102) plane with respect to the total surface area of the positive electrode active material may be 20 % to 80 %, preferably, 30 % to 70 %, more preferably, 40 % to 60 %.

In the positive electrode active material of the present disclosure, the proportion of the (104) plane with respect to the total surface area of the positive electrode active material may be 20 % to 80 %, preferably, 30 % to 70 %, more preferably, 40 % to 60 %.

The surface crystal planes of the positive electrode active material may be analyzed by TEM analysis and SADP imaging. For example, the proportion of a specific surface crystal plane may be measured for 300 particles of the positive electrode active material, and an arithmetic average thereof may be calculated. The TEM analysis may be performed using selected area diffraction pattern (SADP) and fast Fourier transform (FFT).

In particular, the positive electrode active material is prepared as a TEM specimen and set in a TEM instrument. The specimen is then tilted to adjust the beam transmission direction, and the particle morphology is observed in STEM mode. Thereafter, when the inter-plane distance (d-spacing) and diffraction angle obtained through SADP imaging or FFT analysis correspond to those of the (003) plane, the corresponding direction is defined as the (003) plane. This procedure is repeated for 300 particles of the positive electrode active material to determine the proportion of the (003) plane with respect to the total surface area of the positive electrode active material.

The ratio of the major axis to the minor axis of the particles of the positive electrode active material according to the present disclosure may be 1.0 to 1.8, preferably, 1.0 to 1.5, more preferably, 1.0 to 1.4. When the ratio of the major axis to the minor axis of the particles of the positive electrode active material satisfies the above range, the tap density of the positive electrode active material may be improved. Accordingly, the rolling property of the positive electrode including the positive electrode active material is improved, and the energy density of the lithium secondary battery including the positive electrode may be enhanced.

In the present disclosure, the "major axis" and "minor axis" of the positive electrode active material refer to values derived from the maximum diameter (major axis) and minimum diameter (minor axis) of particles, obtained by two-dimensionalizing TEM (Transmission Electron Microscope) images of the positive electrode active material particles and analyzing the two-dimensionalized images using an image analysis program. These values represent an average of several tens to several hundreds of particles, and in the present disclosure, preferably, the average of 300 particles.

The lithium transition metal oxide included in the positive electrode active material may have a composition represented by Formula 1:

[Formula 1] LiₐNi_{b}Co_{c}M¹_{d}M²ₑO₂

In Formula 1, M¹ is Mn, Al, or a combination thereof, and M² is at least one selected from the group consisting Zr, W, Y, Ba, Ca, Ti, Mg, Ta, and Nb.

The variable "a" represents a molar ratio of lithium in the nickel-based lithium composite metal oxide, and may be in the range of 0.80≤a≤1.2, preferably, 0.95≤a≤1.08, more preferably, 1≤a≤1.08.

The variable "b" represents a molar ratio of nickel among the metal elements excluding lithium in the nickel-based lithium composite metal oxide, and may be in the range of 0.6≤b≤0.99, 0.80≤b≤0.95, or 0.83≤b≤0.93. When the nickel content satisfies the above range, the high-capacity characteristic may be implemented.

The variable "c" represents a molar ratio of cobalt among the metal elements excluding lithium in the nickel-based lithium composite metal oxide, and may be in the range of 0<c<0.40, 0<c<0.20, 0<c≤0.15, or 0.01≤c≤0.10.

The variable "d" represents a molar ratio of M¹ among the metal elements excluding lithium in the nickel-based lithium composite metal oxide, and may be in the range of 0<d<0.40, 0<d<0.20, 0<d≤0.15, or 0.01≤d≤0.10.

The variable "e" represents a molar ratio of M² among the metal elements excluding lithium in the nickel-based lithium composite metal oxide, and may be in the range of 0≤e≤0.10, or 0≤e≤0.05.

The powder resistance of the positive electrode active material of the present disclosure may be 0.00005 Ω to 0.00050 Ω, preferably, 0.00010 Ω to 0.00045 Ω, more preferably, 0.00015 Ω to 0.00040 Ω. The powder resistance may be measured using a powder resistance measurement device, such as HPRM-1000 (manufactured by Hantech Co., Ltd.). Since powder resistance mainly reflects the electrical properties at the surface of the positive electrode active material, such powder resistance values may be obtained by controlling the surface crystal planes of the positive electrode active material as in the present disclosure.

The D₅₀ of the positive electrode active material according to the present disclosure may be 2 µm to 8 µm, preferably, 2 µm to 7 µm, more preferably, 2 µm to 6 µm. In the present disclosure, "D₅₀" refers to the particle size at the 50 % point in the volume cumulative particle size distribution of the positive electrode active material powder. The median particle diameter D₅₀ may be measured using a laser diffraction method. For example, the D₅₀ may be measured by dispersing the positive electrode active material powder in a dispersant, introducing the dispersion into a commercially available laser diffraction particle size measurement device (e.g., Microtrac MT 3000), irradiating the dispersion with ultrasonic waves of about 28 kHz at a power of 60 W, obtaining a volume accumulation particle size distribution graph, and then finding the particle size corresponding to 50 % of the volume accumulation.

The specific surface area (BET) of the positive electrode active material according to the present disclosure may be 0.3 m²/g to 1.2 m²/g, preferably, 0.4 m²/g to 1.1 m²/g, more preferably, 0.5 m²/g to 0.9 m²/g. In the present disclosure, the term "specific surface area BET" refers to a value measured by the Brunauer-Emmett-Teller (BET) method, and is calculated from the amount of nitrogen gas adsorbed at a liquid nitrogen temperature (77 K) using a BELSORP-mini II instrument manufactured by BEL Japan.

The tap density of the positive electrode active material according to the present disclosure may be 1.5 g/cm³ to 2.9 g/cm³, preferably, 1.7 g/cm³ to 2.7 g/cm³, more preferably, 1.8 g/cm³ to 2.6 g/cm³. The tap density may be measured, for example, by using a tap density tester (Micromeritics GeoPyc 1365), in which 5 g of the positive electrode active material is charged and then vibrated until a horizontal force of 108 N is applied.

### Method for Preparing Positive Electrode Active Material

Next, a method for preparing the positive electrode active material of the present disclosure will be described.

In the positive electrode active material of the present disclosure, various conditions in the preparing process may affect the control of the proportion of the (003) plane among the surface crystal planes.

The method for preparing a positive electrode active material according to the present disclosure may include a step of mixing a transition metal precursor including nickel, cobalt, and manganese with a lithium raw material and then calcining the mixture.

In this case, the precursor for the positive electrode active material may be a commercially available nickel-cobalt-manganese-based hydroxide or may be prepared by a precursor synthesis method known in the art, such as a co-precipitation method.

For example, the precursor of the positive electrode active material may be prepared by first preparing a transition metal-containing solution including cations of nickel (Ni), cobalt (Co), and M¹, and then adding a chelating agent containing ammonium cations and a basic aqueous solution to the transition metal-containing solution to induce a co-precipitation reaction.

The transition metal-containing solution may include a nickel-containing raw material, a cobalt-containing raw material, and an M¹-containing raw material. The M¹-containing raw material may include a manganese-containing raw material and/or an aluminum-containing raw material.

The nickel-containing raw material may be, for example, a nickel-containing acetate, nitrate, sulfate, halide, sulfide, hydroxide, oxide, or oxyhydroxide. Examples thereof include, but are not limited thereto, Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a nickel fatty acid salt, a nickel halide, and a combination thereof.

The cobalt-containing raw material may be a cobalt-containing acetate, nitrate, sulfate, halide, sulfide, hydroxide, oxide, or oxyhydroxide. Examples thereof include, but are not limited thereto, Co(OH)₂, CoOOH, Co(OCOCH₃)₂·4H₂O, Co(NO₃)₂·6H₂O, CoSO₄, Co(SO₄)₂·7H₂O, or a combination thereof.

The manganese-containing raw material may be, for example, a manganese-containing acetate, nitrate, sulfate, halide, sulfide, hydroxide, oxide, oxyhydroxide, or a combination thereof. Specifically, examples thereof may include manganese oxides such as Mn₂O₃, MnO₂, or Mn₃O₄; manganese salts such as MnCO₃, Mn(NO₃)₂, MnSO₄, manganese acetate, manganese dicarboxylate, manganese citrate, or manganese fatty acid salts; manganese oxyhydroxide; manganese chloride; or a combination thereof, but are not limited thereto.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof.

The transition metal-containing solution may be prepared by adding a nickel-containing raw material, a cobalt-containing raw material, and an M¹-containing raw material to a solvent, specifically water or a mixed solvent of water and an organic solvent that is uniformly miscible with water (for example, an alcohol, etc.), or may be prepared by mixing an aqueous solution of a nickel-containing raw material, an aqueous solution of a cobalt-containing raw material, and an M¹-containing raw material.

The chelating agent containing ammonium cations may be, for example, NH₄OH, (NH₄)₂SO₄, NH₄NO₃, NH₄Cl, CH₃COONH₄, (NH₄)₂CO₃, or a combination thereof, but is not limited thereto. Meanwhile, the chelating agent may be used in the form of an aqueous solution, and in such a case, the solvent may be water or a mixture of water and an organic solvent that is uniformly miscible with water (specifically, an alcohol, etc.).

The basic compound may be a hydroxide of an alkali metal or an alkaline earth metal such as NaOH, KOH, or Ca(OH)₂, a hydrate thereof, or a combination thereof. The basic compound may also be used in the form of an aqueous solution. In this case, the solvent may be water or a mixture of water and an organic solvent that is uniformly miscible with water (specifically, an alcohol, etc.).

The basic compound may be used to control various conditions such as the pH of the reaction solution, the gas conditions during the co-precipitation reaction, the reaction temperature conditions during the co-precipitation, and the concentrations of the nickel-containing raw material, the cobalt-containing raw material, and the M¹-containing raw material. As a result, properties such as the composition and the BET specific surface area of the precursor of the positive electrode active material may be adjusted.

For example, the precursor of the positive electrode active material may have a composition represented by the following Formula 2.

[Formula 2] Niₓ₁Co_{y1}Mn_{z1}(OH)₂

The variable "x1" represents a molar ratio of nickel among all metal elements in the transition metal hydroxide, and may be in the range of 0.6≤x1≤0.99, for example, 0.8≤x1≤0.98, 0.85≤x1≤0.98, or 0.88≤x1≤0.95. When the nickel content satisfies the above range, a positive electrode active material having high capacity characteristics may be produced.

The variable "y1" represents a molar ratio of cobalt among all metal elements in the transition metal hydroxide, and may be in the range of 0<y1<0.4, 0<y1<0.3, 0.01≤y1<0.2, 0.01≤y1<0.14, or 0.01≤y1< 0.12.

The variable "z1" represents a molar ratio of manganese among all metal elements in the transition metal hydroxide, and may be in the range of 0<z1<0.4, 0.01≤z1<0.3, 0.01≤z1<0.2, or 0.01≤z1<0.12.

The specific surface area (BET) of the precursor of the positive electrode active material may be 15 m²/g to 35 m²/g, preferably, 17 m²/g to 30 m²/g, more preferably 19 m²/g to 27 m²/g. When the BET specific surface area of the precursor is large, thermal energy may be delivered into the interior of the particles during calcination, enabling uniform particle growth, and thus the degree of sphericity is improved, which is advantageous in achieving the surface crystal plane required in the present disclosure. However, when the BET specific surface area of the precursor of the positive electrode active material is excessively large, the thermal energy required for uniform particle growth also increases, which may make it difficult to control the surface crystal planes.

Thereafter, the precursor of the positive electrode active material and a lithium raw material may be mixed.

The lithium raw material may include lithium-containing sulfates, nitrates, acetates, carbonates, oxalates, citrates, halides, hydroxides, or oxyhydroxides, and is not particularly limited as long as it is soluble in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, or Li₃C₆H₅O₇, and anyone thereof or a mixture of two or more thereof may be used.

The precursor of the positive electrode active material and the lithium raw material may be mixed in a molar ratio of, for example, about 1:1, about 1:1.05, about 1:1.10, about 1:1.15, or about 1:1.20, but are not limited thereto.

Thereafter, the mixture may be calcined. For example, the calcination may be performed in an air or oxygen atmosphere. The oxygen atmosphere may have an oxygen content of 60 vol% or more.

For example, the calcination may be carried out at a temperature of 830 °C to 950 °C, 840 °C to 940 °C, or 850 °C to 930 °C.

For example, the calcination may be performed for 10 to 28 hours, 11 to 27 hours, or 12 to 26 hours.

By adjusting the calcination conditions as described above, uniform particle growth becomes possible, which is advantageous for achieving the desired surface crystal plane in the present disclosure.

### Positive Electrode

A positive electrode according to the present disclosure includes the above-described positive electrode active material of the present disclosure. Specifically, the positive electrode may include a positive electrode current collector and a positive electrode active material layer formed on the positive electrode current collector. The positive electrode active material layer includes the positive electrode active material powder according to the present disclosure. Since the positive electrode active material powder has been described above, detailed descriptions thereof will be omitted, and the remaining components will be described below.

The positive electrode current collector may include a metal having high electrical conductivity and is not particularly limited as long as it allows the positive electrode active material layer to adhere easily and is non-reactive within the voltage range of the battery. Examples of the positive electrode current collector include stainless steel, aluminum, nickel, titanium, calcined carbon, or aluminum or stainless steel surface-treated with carbon, nickel, titanium, or silver. The positive electrode current collector may typically have a thickness of 3 µm to 500 µm, and fine unevenness may be formed on the surface of the positive electrode current collector to strengthen the bonding strength of the positive electrode active material. For example, the positive electrode collector may be used in various forms, such as a film, a sheet, a foil, a net, a porous body, a foam, a non-woven body, and the like.

The positive electrode active material layer may optionally include a conductive material and a binder, in addition to the positive electrode active material powder.

In this case, the positive electrode active material powder may be included in an amount of 80 wt% to 99 wt%, specifically, 85 wt% to 98.5 wt%, based on the total weight of the positive electrode active material layer. When included within this range, excellent capacity characteristics may be achieved.

The conductive material used to impart conductivity to the electrode, and it is not particularly limited as long as it has an electrically conductive without causing chemical changes in the battery to be constructed. Examples thereof include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive tubes such as carbon nanotube; conductive whiskers such as zinc oxide and potassium titanate; conductive metal oxides such as titanium oxide; or conductive polymers such as polyphenylene derivatives, which may be used alone or in mixture of two or more thereof. The conductive material may be included in an amount of 0.1 wt% to 15 wt% based on the total weight of the positive electrode active material layer.

The binder serves to improve the adhesion between positive electrode active material particles and the adhesive strength between the positive electrode active material and the current collector. Examples thereof include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluororubber, polyacrylic acid, and a polymer in which the hydrogen thereof is substituted with Li, Na, or Ca, or various copolymers thereof, which may be used alone or in mixture of two or more thereof. The binder may be included in an amount of 0.1 wt% to 15 wt% based on the total weight of the positive electrode active material layer.

The positive electrode may be manufactured according to a conventional positive electrode manufacturing method, except that the above-described positive electrode active material powder is used. For example, the positive electrode may be manufactured by dissolving or dispersing the above-described positive electrode active material powder, and optionally a binder, a conductive agent, and a dispersant in a solvent to prepare a positive electrode slurry composition, coating the slurry onto the positive electrode current collector, followed by drying and rolling.

The solvent may be one that is commonly used in the art, and examples thereof include dimethyl sulfoxide (DMSO), isopropyl alcohol, N-methylpyrrolidone (NMP), dimethyl formamide (DMF), acetone, and water, which may be used either alone or in combination of two or more thereof. The amount of the solvent used is sufficient to dissolve or disperse the positive electrode active material, the conductive agent, the binder, and the dispersant while providing a viscosity that allows for good coating thickness uniformity during electrode manufacturing, taking into account the coating thickness and production yield of the slurry.

Alternatively, the positive electrode may be manufactured by casting the positive electrode slurry composition onto a separate support, peeling off the resulting film from the support, and laminating the film onto the positive electrode current collector.

### Electrochemical Device

Next, an electrochemical device according to the present disclosure is described. An electrochemical device according to the present disclosure includes the above-described positive electrode of the present disclosure. The electrochemical device may be, specifically, a battery, a capacitor, more specifically a lithium secondary battery.

The lithium secondary battery may include a positive electrode, a negative electrode disposed to face the positive electrode, a separator interposed between the positive electrode and the negative electrode, and an electrolyte. Since the positive electrode is as described above, repeated description thereof will be omitted, and only the remaining components will be described below.

In addition, the lithium secondary battery may further optionally include a battery case that accommodates an electrode assembly including the positive electrode, the negative electrode, and the separator, and a sealing member for sealing the battery case.

In the lithium secondary battery, the negative electrode includes a negative electrode current collector and a negative electrode active material layer disposed on the negative electrode current collector.

The negative electrode current collector is not particularly limited as long as it has high conductivity without causing chemical changes in the battery, and examples thereof include copper, stainless steel, aluminum, nickel, titanium, heat-treated carbon, copper or stainless steel surface-treated with carbon, nickel, titanium, or silver, and aluminum-cadmium alloy. The negative electrode current collector may typically have a thickness of 3 µm to 500 µm, and as in the positive electrode current collector, fine unevenness may be formed on the surface of the current collector to strengthen the bonding strength of the negative electrode active material. For example, the negative electrode collector may be used in various forms, such as a film, a sheet, a foil, a net, a porous body, a foam, a non-woven body, and the like.

The negative electrode active material layer includes a negative electrode active material, and may optionally include a binder and a conductive material.

As the negative electrode active material, a compound capable of reversible intercalation and deintercalation of lithium may be used. Examples thereof include carbon-based materials such as artificial graphite, natural graphite, graphitized carbon fiber, and amorphous carbon; metallic substances capable of being alloyed with lithium, such as Si, Al, Sn, Pb, Zn, Bi, In, Mg, Ga, Cd, Si alloys, Sn alloys, or Al alloys; metal oxides capable of doping and de-doping lithium, such as SiO_{β} (0<β<2), SnO₂, vanadium oxide, lithium vanadium oxide; or composites containing the above metallic substances and carbon-based materials, such as Si-C composites or Sn-C composites, and these may be used alone or in a mixture of two or more thereof. Additionally, a metal lithium thin film may also be used as the negative electrode active material. In addition, various types of carbon materials may be used, including both low-crystallinity carbon and high-crystallinity carbon. Representative examples of low-crystallinity carbon include soft carbon and hard carbon. Representative examples of high-crystallinity carbon include high-temperature heat-treated carbon such as natural or artificial graphite in amorphous, plate-shaped, flake-shaped, spherical, or fibrous forms; kish graphite; pyrolytic carbon; mesophase pitch-based carbon fiber; meso-carbon microbeads; mesophase pitches; and petroleum or coal tar pitch derived cokes.

The negative electrode active material may be included in an amount of 80 wt% to 99 wt% based on the total weight of the negative electrode active material layer.

The binder is a component that assists in the binding between the conductive material, the active material, and the current collector, and is typically added in an amount of 0.1 wt% to 10 wt% based on the total weight of the negative electrode active material layer. Examples of the binder include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component added to further enhance the conductivity of the negative electrode active material, and may be added in an amount of 10 wt% or less, preferably, 5 wt% or less, based on the total weight of the negative electrode active material layer. The conductive material is not particularly limited as long as it has conductivity without causing chemical changes in the battery. Examples thereof include graphite such as natural graphite and artificial graphite; carbon black such as acetylene black, Ketjen black, channel black, furnace black, lamp black, and thermal black; conductive fibers such as carbon fibers or metal fibers; fluorinated carbon; metal powders such as aluminum or nickel powder; conductive whiskers such as zinc oxide or potassium titanate; conductive metal oxides such as titanium oxide; and conductive materials such as polyphenylene derivatives.

The negative electrode active material layer may be formed by applying and drying a negative electrode slurry composition, which is prepared by dissolving or dispersing a negative electrode active material and, optionally, a binder and a conductive material in a solvent, onto the negative electrode current collector. Alternatively, the negative electrode active material layer may be formed by casting the negative electrode slurry composition onto a separate support, peeling off the resulting film from the support, and laminating the film onto the negative electrode current collector.

Meanwhile, in the lithium secondary battery, the separator separates the negative electrode from the positive electrode and provides a pathway for lithium-ion migration. Any separator commonly used in lithium secondary batteries may be employed without particular limitation. Specifically, a material having low resistance to ion migration in the electrolyte and excellent electrolyte absorption capability may be preferred. For example, the separator may be a porous polymer film, for example, a porous polymer film made of a polyolefin polymer such as ethylene homopolymer, propylene homopolymer, ethylene/butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, polyethylene terephthalate fiber, etc. may be used. In addition, a coated separator containing a ceramic component or a polymer material may be used to secure heat resistance or mechanical strength, and may be selectively used in a single-layer or multi-layer structure.

In addition, the electrolyte used in the present disclosure may include, but is not limited to, an organic liquid electrolyte, an inorganic liquid electrolyte, a solid polymer electrolyte, a gel-type polymer electrolyte, a solid inorganic electrolyte, a molten inorganic electrolyte, and the like that may be used in the manufacture of a lithium secondary battery.

Specifically, the electrolyte may include an organic solvent and a lithium salt.

As the organic solvent, any solvent capable of acting as a medium through which ions involved in the electrochemical reaction of the battery may migrate may be used without particular limitation. Examples of the organic solvent include ester solvents such as methyl acetate, ethyl acetate, γ-butyrolactone, and ε-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol solvents such as ethyl alcohol and isopropyl alcohol; nitriles such as R-CN (R is a linear, branched, or cyclic hydrocarbon group having 2 to 20 carbon atoms, which may include a double-bonded aromatic ring or an ether bond); amides such as dimethylformamide; dioxolanes such as 1,3-dioxolane; and sulfolanes. Among these, a carbonate solvent may be preferred, and a mixture of a cyclic carbonate having high ionic conductivity and high dielectric constant capable of improving charge/discharge performance of the battery (e.g., ethylene carbonate or propylene carbonate) and a low-viscosity linear carbonate compound (e.g., ethyl methyl carbonate, dimethyl carbonate, or diethyl carbonate) may be more preferred.

The lithium salt may be used without any particular limitations as long as it is a compound capable of providing lithium ions used in a lithium secondary battery. Specifically, the anion of the lithium salt may be at least one selected from F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and the lithium salt may be at least one selected from the group consisting of LiPF₆, LiClO₄, LiAsF₆, LiBF₄, LiSbF₆, LiAlO₂, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, and LiB(C₂O₄)₂. The concentration of the lithium salt may be used within the range of 0.1 M to 2.0 M. When the concentration of the lithium salt falls in the above range, the electrolyte has appropriate conductivity and viscosity, so that the excellent electrolyte performance may be achieved, and the lithium ions may effectively migrate.

In addition to the electrolyte components, the electrolyte may further contain one or more additives, such as, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of the battery, suppressing battery capacity decrease, and improving the discharge capacity of the battery. In this case, the additive may be contained in an amount of 0.1 wt% to 5 wt% based on the total weight of the electrolyte.

Hereinafter, embodiments of the present disclosure are described in detail to enable one of ordinary skill in the art to which the present disclosure belongs, to easily practice the present disclosure. However, the present disclosure may be implemented in many different forms and is not limited to the embodiments described herein.

### MODE FOR CARRYING OUT THE INVENTION

### Example 1

A positive electrode active material precursor having a composition of Ni_{0.65}Co_{0.07}Mn_{0.28}(OH)₂ and a specific surface area (BET) of 27 m²/g was prepared. The positive electrode active material precursor and Li₂CO₃ were mixed such that the molar ratio of total transition metals to lithium was 1:1.06, and then calcined at 910 °C for 23 hours under an oxygen atmosphere to prepare a positive electrode active material having a composition of Li_{1.06}Ni_{0.65}Co_{0.07}Mn_{0.28}O₂. In this case, the oxygen atmosphere during calcination was a condition in which the volume ratio of O₂ to air was 8:2.

As a result of TEM analysis of the positive electrode active material of Example 1 thus prepared, the ratio of the (003) plane to the total surface area was 22 %.

### Example 2

A positive electrode active material precursor having a composition of Ni_{0.65}Co_{0.07}Mn_{0.28}(OH)₂ and a specific surface area (BET) of 19 m²/g was prepared. The positive electrode active material precursor and Li₂CO₃ were mixed such that the molar ratio of total transition metals to lithium was 1:1.08, and then calcined at 910 °C for 23 hours under an oxygen atmosphere to prepare a positive electrode active material having a composition of Li_{1.08}Ni_{0.65}Co_{0.07}Mn_{0.28}O₂. In this case, the oxygen atmosphere during calcination was a condition in which the volume ratio of O₂ to air was 8:2.

As a result of TEM analysis of the positive electrode active material of Example 2 thus prepared, the ratio of the (003) plane to the total surface area was 37 %.

### Example 3

A positive electrode active material precursor having a composition of Ni_{0.65}Co_{0.07}Mn_{0.28}(OH)₂ and a specific surface area (BET) of 27 m²/g was prepared. The positive electrode active material precursor and Li₂CO₃ were mixed such that the molar ratio of total transition metals to lithium was 1:1.06, and then calcined at 870 °C for 19 hours under an oxygen atmosphere to prepare a positive electrode active material having a composition of Li_{1.06}Ni_{0.65}Co_{0.07}Mn_{0.28}O₂. In this case, the oxygen atmosphere during calcination was a condition in which the volume ratio of O₂ to air was 8:2.

As a result of TEM analysis of the positive electrode active material of Example 3 thus prepared, the ratio of the (003) plane to the total surface area was 32 %.

### Comparative Example 1

A positive electrode active material precursor having a composition of Ni_{0.65}Co_{0.07}Mn_{0.28}(OH)₂ and a specific surface area (BET) of 9 m²/g was prepared. The positive electrode active material precursor and Li₂CO₃ were mixed such that the molar ratio of total transition metals to lithium was 1:1.10, and then calcined at 870 °C for 19 hours under an oxygen atmosphere to prepare a positive electrode active material having a composition of Li_{1.10}Ni_{0.65}Co_{0.07}Mn_{0.28}O₂. In this case, the oxygen atmosphere during calcination was a condition in which the volume ratio of O₂ to air was 8:2.

As a result of TEM analysis of the positive electrode active material of Comparative Example 1 thus prepared, the ratio of the (003) plane to the total surface area was 64 %.

### Comparative Example 2

A positive electrode active material precursor having a composition of Ni_{0.65}Co_{0.07}Mn_{0.28}(OH)₂ and a specific surface area (BET) of 9 m²/g was prepared. The positive electrode active material precursor and Li₂CO₃ were mixed such that the molar ratio of total transition metals to lithium was 1:1.03, and then calcined at 870 °C for 19 hours under an oxygen atmosphere to prepare a positive electrode active material having a composition of Li_{1.03}Ni_{0.65}Co_{0.07}Mn_{0.28}O₂. In this case, the oxygen atmosphere during calcination was a condition in which the volume ratio of O₂ to air was 8:2.

As a result of TEM analysis of the positive electrode active material of Comparative Example 2 thus prepared, the ratio of the (003) plane to the total surface area was 85 %.

### Experimental Example 1 - Observation of TEM Images of Positive Electrode Active Material Particles

Cross-sectional images of the positive electrode active materials prepared in Examples 1 to 3 and Comparative Examples 1 and 2 were taken using a TEM (Transmission Electron Microscope).

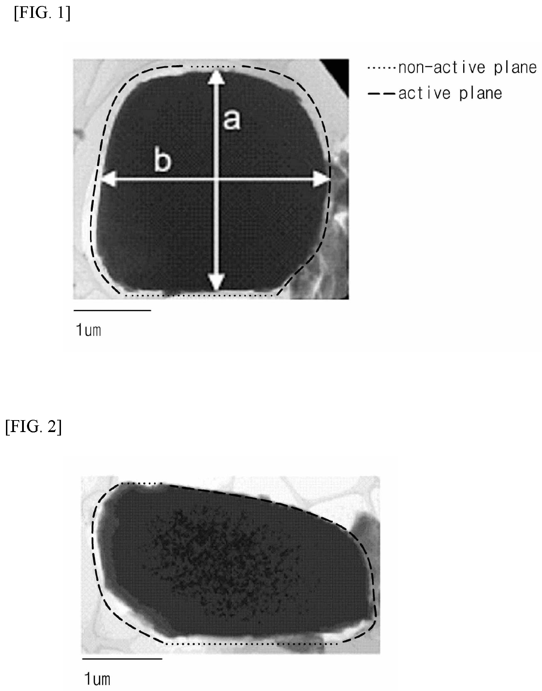

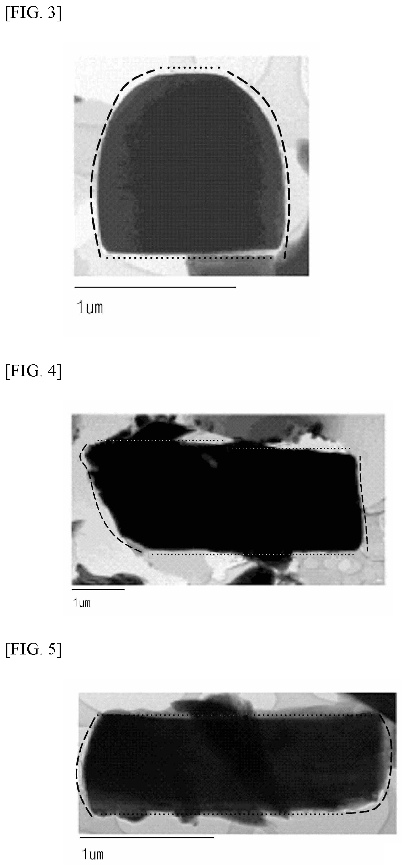

In particular, in the cross-sectional TEM images, the short-axis and long-axis lengths of 300 particles were measured, and the ratio of the long axis to the short axis (*e.g.,* the a/b value in FIG. 1) was calculated for each. Representative examples of the results are illustrated in FIGS. 1 to 5. In addition, the arithmetic average values of the measured long-to-short axis ratios are shown in Table 1 below.

**[Table 1]**

| | Ratio of long axis to short axis |
|---|---|
| Example 1 | 1.31 |
| Example 2 | 1.52 |
| Example 3 | 1.34 |
| Comparative Example 1 | 2.07 |
| Comparative Example 2 | 2.23 |

In addition, FIGS. 1 to 5 distinguish between non-active planes and active planes. The non-active plane is the (003) plane, while the active planes are the (102) and (104) planes.

### Experimental Example 2 - Measurement of Powder Resistance of Positive Electrode Active Material

The powder resistance of each of the positive electrode active materials prepared in Examples 1 to 3 and Comparative Examples 1 and 2 was measured using a powder resistance measuring apparatus (HPRM-1000, Hantech Co., Ltd.). Specifically, 5 g of each of the positive electrode active materials prepared in Examples 1 to 3 and Comparative Examples 1 and 2 was placed into a cylindrical metal mold in the HPRM-1000 apparatus, and a pressure of 2,000 kgf/cm² was applied to measure the powder resistance. The measured powder resistance values are shown in Table 2 below.

**[Table 2]**

| | Power resistance (Ω) |
|---|---|
| Example 1 | 0.00033 |
| Example 2 | 0.00023 |
| Example 3 | 0.00029 |
| Comparative Example 1 | 0.00013 |
| Comparative Example 2 | 0.00009 |

### Experimental Example 3 - Measurement of Initial Resistance

A positive electrode slurry was prepared by mixing the positive electrode active material prepared in Examples 1 to 3 and Comparative Examples 1 and 2, carbon black as a conductive material, and polyvinylidene fluoride (PVdF) as a binder in N-methylpyrrolidone (NMP) solvent at a weight ratio of 96:2:2. The slurry was then applied to one surface of an aluminum current collector, dried at 130 °C, and roll-pressed to manufacture a positive electrode.

Lithium metal was used as the negative electrode.

A porous polyethylene separator was interposed between the negative electrode and the positive electrode prepared as described above to prepare an electrode assembly. The electrode assembly was placed inside a battery case, and an electrolyte was injected into the case to manufacture a lithium secondary battery. The electrolyte was prepared by dissolving 1.0 M lithium hexafluorophosphate (LiPF₆) and 2 wt% VC (vinylene carbonate) in an organic solvent made up of a mixture of ethylene carbonate (EC), dimethyl carbonate (DMC), and diethyl carbonate (DEC) in a volume ratio of 1:2:1.

For each of the lithium secondary battery cells prepared as described above, the initial resistance was measured. The measurement results are indicated in Table 3 below. The initial resistance was calculated based on the rate of voltage change when a current of 2.5 C was applied for 10 seconds at 50 % SOC during the second cycle, using the discharge capacity at 0.3 C in the first cycle as the reference.

**[Table 3]**

| | Initial resistance (Ω) |
|---|---|
| Example 1 | 1.36 |
| Example 2 | 1.52 |
| Example 3 | 1.34 |
| Comparative Example 1 | 2.07 |
| Comparative Example 2 | 2.23 |

### Experimental Example 4 - Measurement of Life Characteristics

For each lithium secondary battery cell manufactured in Experimental Example 3, charging was performed at 45 °C with a constant current of 0.5 C up to 4.45 V with a cut-off of 0.05 C. Subsequently, discharging was performed at a constant current of 0.5 C until the voltage reached 3.0 V. One cycle was defined as the charging and discharging behavior, and this cycle was repeated 100 times. Afterward, capacity retention rate and resistance increase rate were measured based on the number of cycles. The capacity retention rate was calculated by dividing the capacity at the 100th cycle by the initial capacity and multiplying the result by 100. The resistance increase rate was calculated by dividing the resistance at the 100th cycle by the initial resistance and multiplying the result by 100. The results are indicated in Table 4 below.

**[Table 4]**

| | Capacity retention rate (%) | Resistance increase rate (%) |
|---|---|---|
| Example 1 | 93.3 | 32.0 |
| Example 2 | 90.5 | 34.2 |
| Example 3 | 92.7 | 33.9 |
| Comparative Example 1 | 89.9 | 36.4 |
| Comparative Example 2 | 85.1 | 53.7 |

## Claims

1. A positive electrode active material comprising a lithium transition metal oxide including Ni in an amount of 60 at% or more among the transition metals excluding lithium, in a form of a single particle made up of one nodule or in a form of a pseudo-single particle that is a complex of 30 or fewer nodules,
wherein a proportion of a (003) plane with respect to a total surface area of the positive electrode active material is 40 % or less.

2. The positive electrode active material according to claim 1, wherein a ratio of a major axis to a minor axis of particles of the positive electrode active material is 1.0 to 1.8.

3. The positive electrode active material according to claim 1, wherein the lithium transition metal oxide has a composition represented by Formula 1:
[Formula 1] LiₐNi_{b}Co_{c}M¹_{d}M²ₑO₂
wherein, M¹ is Mn, Al, or a combination thereof; M² is at least one selected from the group consisting of Zr, W, Y, Ba, Ca, Ti, Mg, Ta, and Nb; and a, b, c, d, and e satisfy 0.8≤a≤1.2, 0.6≤b<1, 0<c<0.4, 0<d<0.4, 0≤e≤0.1.

4. The positive electrode active material according to claim 1, wherein a proportion of a (102) plane with respect to the total surface area of the positive electrode active material is 20 % to 80 %.

5. The positive electrode active material according to claim 1, wherein a proportion of a (104) plane with respect to the total surface area of the positive electrode active material is 20 % to 80 %.

6. The positive electrode active material according to claim 1, wherein a powder resistance of the positive electrode active material is 0.00005 Ω to 0.0005 Ω.

7. The positive electrode active material according to claim 1, wherein the D₅₀ of the positive electrode active material is 2 µm to 8 µm.

8. The positive electrode active material according to claim 1, wherein a specific surface area BET of the positive electrode active material is 0.3 m²/g to 1.2 m²/g.

9. The positive electrode active material according to claim 1, wherein a tap density of the positive electrode active material is 1.5 g/cm³ to 2.9 g/cm³.

10. A positive electrode comprising the positive electrode active material of claim 1.

11. A lithium secondary battery comprising the positive electrode of claim 10.
